# EUROPEAN PATENT APPLICATION

(11) **EP 2 469 808 A2**
(43) Date of publication of application: **27.06.2012**
(21) Application number: 11193658.9
(22) Date of filing: 15.12.2011
(51) Int. Cl.: H04M 1/02

(54) **Mobile device**

(30) Priority: 23.12.2010 KR 20100133236
(71) Applicant: Pantech Co., Ltd., Seoul 121-792 (KR)
(72) Inventor: Kim, Sung Pil, 121-792 Seoul (KR)
(74) Representative: Jordan, Volker Otto Wilhelm

(57) **Abstract**

A mobile device includes a body, a cover unit covering a lower face and an outer circumferential edge of the body and being openable, a flexible display unit having a center portion and opposing sides installed to be drawn into or out from an inside region of the cover unit as the cover unit is opened or closed; and a hinge unit configured to open if the cover unit slides in a direction away from the center of the body.

## Description

### BACKGROUND

FIELD

The present disclosure relates to a mobile device, and more particularly to a mobile device having a flexible display unit that may be retracted into and extended from a cover unit.

DISCUSSION OF THE BACKGROUND

Recently, mobile devices with increased portability, such as a mobile phone, a smartphone, an MP3 player, and a portable multimedia player (PMP), have become commercially available. In order to offer users a visual experience, the mobile device may include a display, and some users may prefer an increased display size.

However, in order to maintain the portability of a mobile device, the overall size of the mobile device may be smaller. In addition, some users may prefer a mobile device that may reduce distortion in representing an image on its display.

### SUMMARY

Exemplary embodiments of the present invention provide a mobile device having a flexible display unit that may be retracted into and extended from a cover unit to balance display size with the size of the mobile device.

Additional features of the invention will be set forth in the description which follows, and in part will be apparent from the description, or may be learned by practice of the invention.

An exemplary embodiment of the present invention discloses a mobile device including a body, a cover unit covering a lower face and an outer circumferential edge of the body, the cover unit being openable in a direction away from a center of the body, a flexible display unit having a center portion and opposing sides configured to be drawn into or out from an inside region of the cover unit as the cover unit is opened or closed, and a hinge unit configured to open if the cover unit slides in a direction away from the center of the body.

An exemplary embodiment of the present invention discloses a mobile device including a body, a cover unit covering a lower face and an outer circumferential edge of the body, the cover unit being openable away from a center of the body, a first input unit and a second input unit, the first input unit and the second input unit each including a portion configured to be drawn into or out from an inside region of the cover unit as the cover unit is opened or closed, and a hinge unit configured to rotate into an open position if the cover unit slides in a direction away from the center of the body.

It is to be understood that both the foregoing general description and the following detailed description are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this specification, illustrate embodiments of the invention, and together with the description serve to explain the principles of the invention.

FIG. 1A is a perspective view illustrating a mobile device having a cover unit in a closed state according to an exemplary embodiment of the present invention.

FIG. 1B is a side view of the mobile device shown in FIG. 1A.

FIG. 2A is a perspective view illustrating a mobile device having a cover unit in an open state according to an exemplary embodiment of the present invention.

FIG. 2B is a side view of the mobile device shown in FIG. 2A.

FIG. 3A is a cross-sectional view taken along the line I-I' of FIG. 1A.

FIG. 3B is a cross-sectional view taken along the line I-I' of FIG. 2A.

FIG. 3C is an enlarged cross-sectional view illustrating a second cover shown in FIG. 3A and FIG. 3B.

FIG. 4 is a perspective view illustrating an internal configuration of the mobile device shown in FIG. 1.

FIG. 5A is a perspective view of a hinge according to an exemplary embodiment of the present invention.

FIG. 5B is a perspective view illustrating an operation of the hinge shown in FIG. 5A.

FIG. 6 is a cross-sectional view of a mobile device according to an exemplary embodiment of the present invention.

FIG. 7A and FIG. 7B illustrate mobile devices according to exemplary embodiments of the present invention.

### DETAILED DESCRIPTION OF THE ILLUSTRATED EMBODIMENTS

Exemplary embodiments now will be described more fully hereinafter with reference to the accompanying drawings, in which exemplary embodiments are shown. The present disclosure may, however, be embodied in many different forms and should not be construed as limited to the exemplary embodiments set forth therein. Rather, these exemplary embodiments are provided so that the present disclosure will be thorough and complete, and will fully convey the scope of the present disclosure to those skilled in the art. In the description, details of well-known features and techniques may be omitted to avoid unnecessarily obscuring the presented embodiments.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. Furthermore, the use of the terms a, an, etc. does not denote a limitation of quantity, but rather denotes the presence of at least one of the referenced item. The use of the terms "first", "second", and the like does not imply any particular order, but they are included to identify individual elements. Moreover, the use of the terms first, second, etc. does not denote any order or importance, but rather the terms first, second, etc. are used to distinguish one element from another. It will be further understood that the terms "comprises" and/or "comprising", or "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof. It will be understood that for the purposes of this disclosure, "at least one of" will be interpreted to mean any combination of the enumerated elements following the respective language, including a combination of multiples of the enumerated elements or fewer than all the enumerated elements. For example, "at least one of X, Y, and Z" will be construed to mean X only, Y only, Z only, XX, YY, ZZ, or any combination of two or more items X, Y, and Z (e.g. XYZ, XZ, XXZ, YZ, or X).

It will be understood that when an element is referred to as being "on" or "connected" with, between, or to another element, it can be directly on or directly connected with, between, or to the other element, or intervening elements may be present. In contrast, if an element is referred to as being "directly on" or "directly connected to" another element, there are no intervening elements or layers present.

Unless otherwise defined, all terms (including technical and scientific terms) used herein have the same meaning as commonly understood by one of ordinary skill in the art. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

In the drawings, like reference numerals denote like elements. The shape, size and regions, and the like, of the drawing may be exaggerated for clarity.

Hereinafter, a configuration of a mobile device according to an exemplary embodiment will be described.

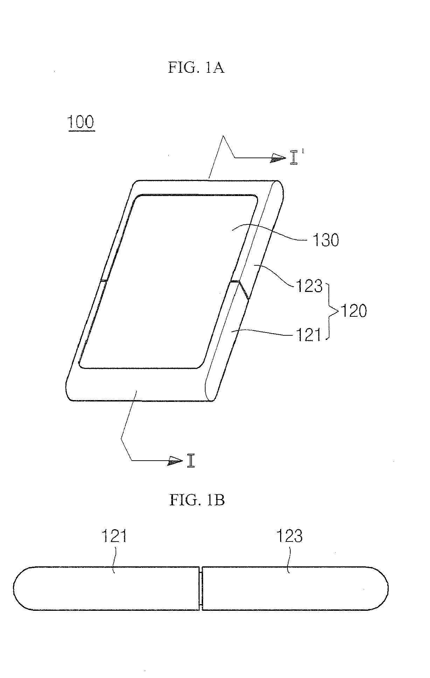

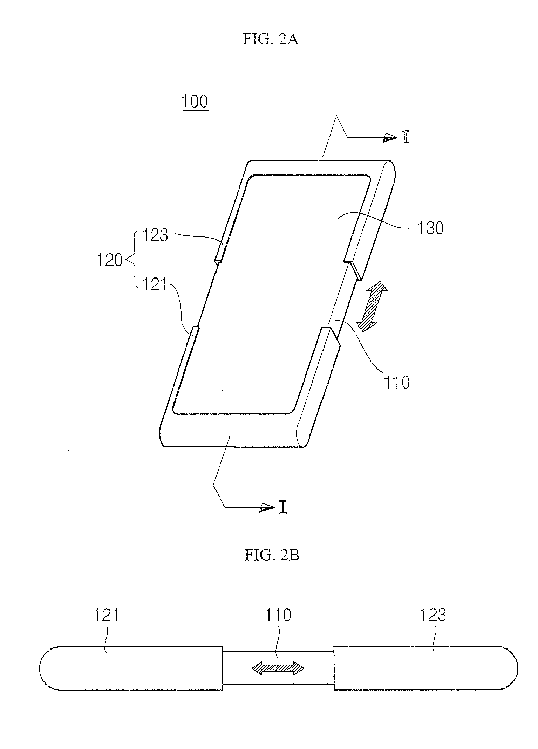

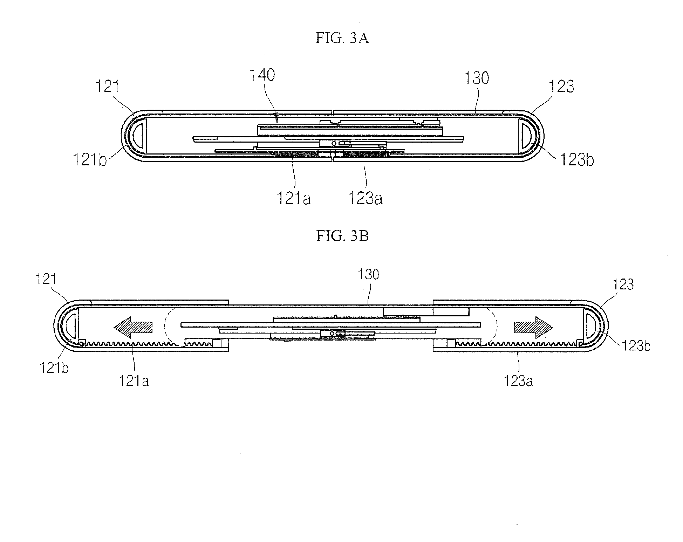

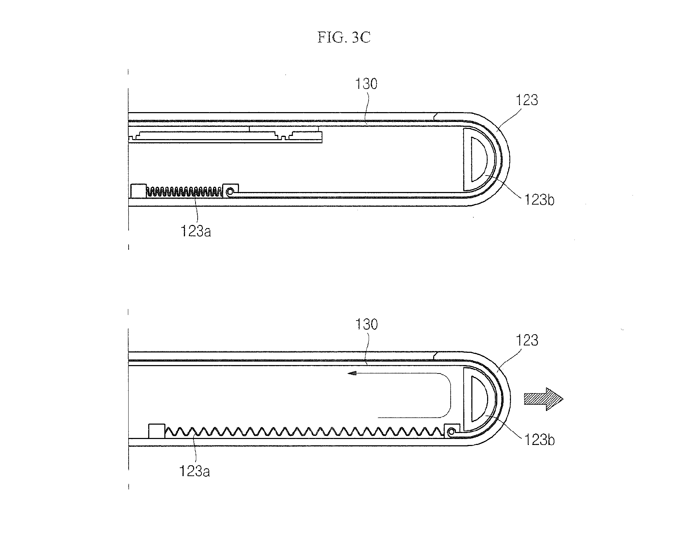

FIG. 1A is a perspective view illustrating a mobile device having a cover unit in a closed state according to an exemplary embodiment of the present invention. FIG. 1B is a side view of the mobile device shown in FIG. 1A. FIG. 2A is a perspective view illustrating a mobile device having a cover unit in an open state according to an exemplary embodiment of the present invention. FIG. 2B is a side view of the mobile device shown in FIG. 2A. FIG. 3A is a cross-sectional view taken along the line I-I' of FIG. 1A. FIG. 3B is a cross-sectional view taken along the line I-I' of FIG. 2A. FIG. 3C is an enlarged cross-sectional view illustrating a second cover shown in FIG. 3A and FIG. 3B.

Referring to FIG. 1A, 1B, 2A, 2B, 3A, 3B, and 3C, a mobile device 100 includes a body 110, a cover unit 120, a flexible display unit 130, and a hinge unit 140.

The body 110 has a substantially bar-like shape and has a space in which circuits and mechanical components of the mobile device 100 may be arranged. For example, certain circuit components, such as a processor, memory, radio frequency (RF) transceiver, and antenna, may be incorporated into the mobile device 100, but a detailed description of the circuit components will be omitted. The hinge unit 140 is also arranged in the body 110.

The cover unit 120 is configured to cover a lower face and an outer circumferential edge of the body 110. In addition, the cover unit 120 is arranged to expose the flexible display unit 130 disposed on a top surface of the body 110. Further, the cover unit 120 is installed in the body 110 to be openable in opposite directions by sliding the cover unit 120 in a linear motion.

The cover unit 120 may include a first cover 121 and a second cover 123. The first cover 121 and the second cover 123 may be separated from each other. If the body 110 may be characterizes to include an upper part and a lower part, the first cover 121 may be arranged at the lower part of the body 110 and the second cover 123 may be arranged at the upper part of the body 110. For the purposes of this disclosure, the "upper part" and the "lower part" may not necessarily refer to geometric or geographic arrangements or orientations of the body 110. Rather, these terms are used merely to distinguish a first part of the body 110 from a second part of the body 110. Thus, the "upper part" and the "lower part" are not intended to be limited to the orientation shown in FIG. 2A.

The first cover 121 and the second cover 123 slide in a linear motion in opposite directions along the side surface of the body 110 to allow the cover unit 120 to be opened. If the first cover 121 and the second cover 123 each slide in a linear motion in a direction away from a center of the body 110 (this direction will be referred to as the "first direction" or an open direction hereinafter), the cover unit 120 may be opened. If the first cover 121 and the second cover 123 each slide in a linear motion in a direction toward a center of the body 10 (this direction will be referred to as the "second direction" or a closed direction hereinafter), the cover unit 120 may be closed. Beginning from either an opened state or a closed state, the first cover 121 and the second cover 123 slide in a linear motion in opposite directions from each other.

The first cover 121 and the second cover 123 may simultaneously slide in a linear motion, in the open direction or closed direction, through the mechanism of the hinge unit 140. For example, from the closed state, if the first cover 121 slides in a linear motion in the open direction, the second cover 123 may slide in a linear motion in the open direction also, which for the second cover 123 may be a linear direction opposite to the linear direction of the first cover 121, thereby allowing the first cover 121 and the second cover 123 to be opened. Similarly, from the closed state, if the second cover 123 slides in a linear motion in the open direction, the first cover 121 may slide in a linear motion in the open direction also, which for the first cover 121 may be a linear direction opposite to the linear direction of the second cover 123, thereby allowing the first cover 121 and the second cover 123 to be opened.

Similarly, if the cover unit 120 is open and the first cover 121 slides in a linear motion in the closed direction, the second cover 123 also slides in a linear motion in the closed direction, which may be a linear direction opposite to the linear direction of the first cover 121, thereby allowing the first cover 121 and the second cover 123 to be closed. Similarly, from the open state, if the second cover 123 slides in a linear motion in the closed direction, the first cover 121 also slides in a linear motion in the closed direction, which may be a linear direction opposite to the linear direction of the second cover 123, thereby allowing the first cover 121 and the second cover 123 to be closed.

If the first cover 121 and the second cover 123 are opened or closed, the opposing sides of the flexible display unit 130 may be drawn in or out from the inside of the cover unit 120 to change the dimension of the exposed portion of the flexible display unit 130, which will be described in more detail below. Herein, the "inside" of the cover unit 120 may include a region not exposed to a user or a region not exposed to the exterior of the mobile device. This may reduce the risk of the opposing sides of the flexible display unit 130 being damaged or becoming dirty through contact with the user's fingers or other external objects.

The cover unit 120 may include an elastic member and a guide member, which will be described in more detail below, along with the configuration of the flexible display unit 130.

The cover unit 120 may include a fixing plate connected to the hinge unit 140, which will be described in more detail below, along with the configuration of the hinge unit 140.

The flexible display unit 130 may have a substantially rectangular parallelepiped shape. The flexible display unit 130 may have a central portion and opposing side portions, and the opposing side portions may include a first side and a second side. The central portion of the flexible display unit 130 may be disposed over the body 110 and may be exposed by an opening of the cover unit 120. The first side and the second side of the flexible display unit 130 are mechanically connected to the inside of the cover unit 120, and are configured to be drawn in to or out from the inside of the cover unit 120 according to the opening or closing operation of the cover unit 120 described above.

As described above, the cover unit 120 may include the elastic member and the guide member. More specifically, the first cover 121 may include a first elastic member 121a and a first guide member 121b, and the second cover 123 may include a second elastic member 123a and a second guide member 123b.

One side of the first elastic member 121a is arranged at a lower face of the first cover 121, and the other side of the first elastic member 121a is connected to the first side of the flexible display unit 130. The first elastic member 121a may include a spring. Therefore, the first elastic member 121a may provide an elastic connection between the first cover 121 and the first side of the flexible display unit 130.

The first guide member 121b may be arranged along a path through which the first side of the flexible display unit 130 is drawn in or out. For example, the first guide member 121b may be arranged at an internal end of the first cover 121, so that a portion of the flexible display unit 130 that is inside the cover unit 120, when the cover unit 120 is in a closed position, travels through the space between the first guide member 121b and the first cover 121 to be exposed if the cover unit 120 is opened.

The first guide member 121b may have a first curved surface, which may allow the flexible display unit 130 to pass through the space between the first guide member 121b and the first cover 121 more smoothly. When the first cover 121 slides away from the center of the body 110, the first side of the flexible display unit 130 is drawn out from the inside of the first cover 121. Here, the first elastic member 121 a stretches to maintain tension on the flexible display unit 130. Here, the first curved surface of the first guide member 121b is convex in the opposite direction to a direction in which elasticity of the elastic member acts. In addition, the first curved surface of the first guide member 121b provides a portion of a path through which the first side of the flexible display unit 130 is drawn in or out, and the first side of the flexible display unit 130 moves toward or along the first curved surface of the first guide member 121b.

One side of the second elastic member 123a is arranged at a lower face of the second cover 123 and the other side of the second elastic member 123a is connected to the second side of the flexible display unit 130. The second elastic member 123a may include a spring. Therefore, the second elastic member 123a may provide an elastic connection between the first cover 123 and the second side of the flexible display unit 130.

The second guide member 123b may be arranged along a path through which the second side of the flexible display unit 130 is drawn in or out. For example, the second guide member 123b may be arranged at an internal top end of the second cover 123, so that a portion of the flexible display unit 130 that is inside the cover unit 120, when the cover unit 120 is in a closed position, travels through the space between the second guide member 123b and the second cover 123 to be exposed if the cover unit 120 is opened.

The second guide member 123b may have a second curved surface, which may allow the flexible display unit 130 to pass through the space between the second guide member 123b and the second cover 123 more smoothly. When the second cover 123 slides away from the center of the body 110, the second side of the flexible display unit 130 is drawn out from the inside of the second cover 123. Here, the second elastic member 123a stretches to maintain tension on the flexible display unit 130. Here, the second curved surface of the second guide member 123b is convex in the opposite direction to a direction in which the elasticity of the elastic member acts. In addition, the second curved surface of the second guide member 123b provides a portion of a path through which the second side of the flexible display unit 130 is drawn in or out, and the second side of the flexible display unit 130 moves toward or along the second curved surface of the second guide member 123b.

When the flexible display unit 130 is drawn out from the cover unit 120 while the cover unit 120 is moved toward an open state, the first elastic member 121 a, the first guide member 121b, the second elastic member 123a, and the second guide member 123b allow the flexible display unit 130 to remain in tension, so that the flexible display unit 130 may be retracted when the cover unit 120 is moved toward a closed state.

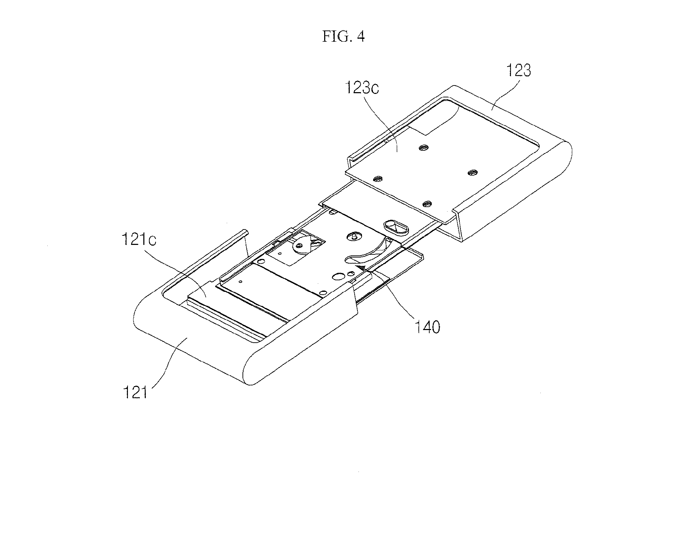

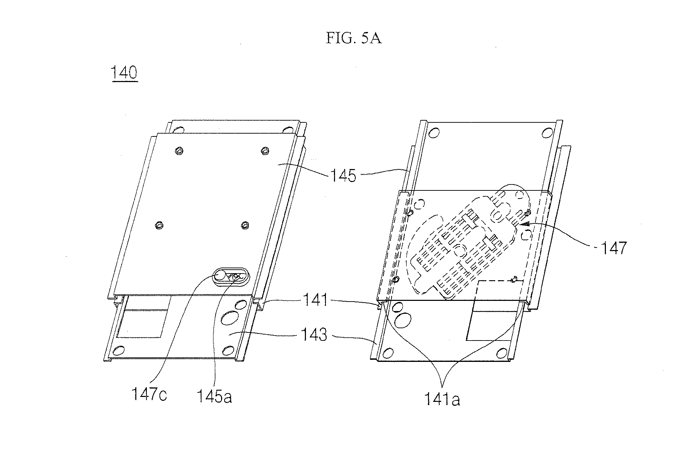

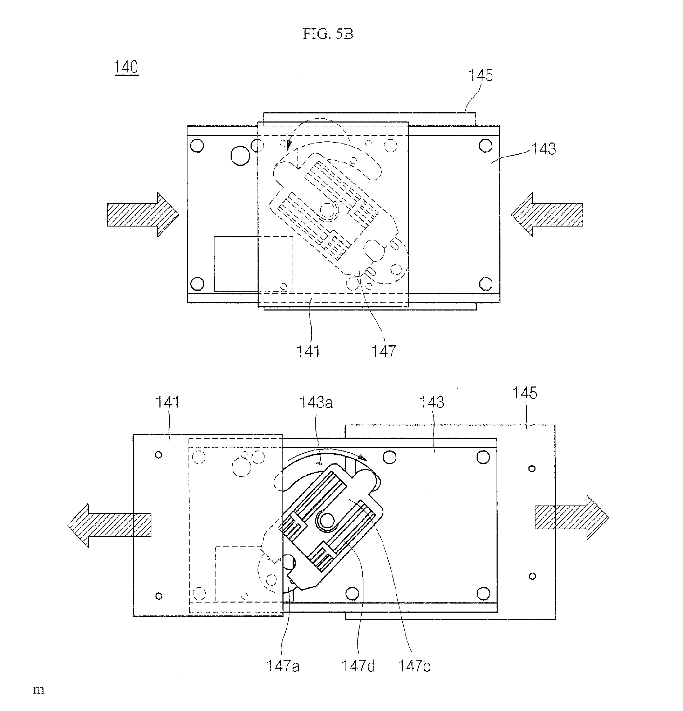

FIG. 4 is a perspective view illustrating an internal configuration of the mobile device shown in FIG. 1, FIG. 5A is a perspective view of a hinge according to an exemplary embodiment of the present invention, and FIG. 5B is a perspective view illustrating an operation of the hinge unit shown in FIG. 5A

Before describing the hinge unit 140 in more detail, the fixing plate of the cover unit 120 will be briefly described in more detail. The fixing plate of the cover unit 120 may include a first fixing plate 121c and a second fixing plate 123c. The first fixing plate 121c may be connected to an internal lower face of the first cover 121. The second fixing plate 123c may be connected between internal side surfaces of the second cover 123.

Hereinafter, a configuration of the hinge unit 140 will be described in more detail.

Referring to FIG. 4, FIG. 5A, and FIG. 5B, the hinge unit 140 may include a first plate 141, a second plate 143, a third plate 145, and a rotation module 147.

The first plate 141 is connected to the first fixing plate 121c and has rails 141a arranged at opposite edges of the first plate 141.

The second plate 143 is arranged on the first plate 141 and may have a curved first slit hole 143a. The second plate 143 is connected to the first plate 141 to slide in a linear motion along the rails 141a of the first plate 141.

The third plate 145 is connected to the second fixing plate 123c and arranged on the second plate 143. The third plate 145 may have a linear second slit hole 145a. The third plate 145 may be connected to the first plate 141 and the second plate 143 to slide in a linear motion along the rails 141a of the first plate 141 and the opposing sides of the second plate 143.

The rotation module 147 may have one side rotatably connected to the first plate 141, a center rotatably connected to the second plate 143, and another side having a hooking protrusion 147c inserted into the first slit hole 143a and the second slit hole 145a.

A configuration of the rotation module 147 will now be described in more detail.

The rotation module 147 may include a first rotary unit 147a, a second rotary unit 147b, a hooking protrusion 147c, and a compression spring 147d.

One side of the first rotary unit 147a may be rotatably connected to the first plate 141.

The hooking protrusion 147c may be arranged at one side of the second rotary unit 147b. The center of the second rotary unit 147b may be rotatably connected to the second plate 143.

The hooking protrusion 147c may protrude from the second rotary unit 147b by a predetermined length to penetrate the first slit hole 143a and the second slit hole 145a from one top surface of the second rotary unit 147b. When the hinge unit 140 slides in a linear motion, the hooking protrusion 147c may move along paths of the first slit hole 143a and the second slit hole 145a. Here, the hooking protrusion 147c is hooked at ends of the first slit hole 143a and the second slit hole 145a, thereby restricting a further sliding motion of the hinge unit 140. In addition, sliding distances of the first cover 121 and the second cover 123 are restricted according to lengths of the first slit hole 143a and the second slit hole 145a.

The compression spring 147d may be connected between one side of the first rotary unit 147a and another side of the second rotary unit 147b. Thus, the compression spring 147d may provide an elastic connection between the first rotary unit 147a and the second rotary unit 147b.

The operation of the hinge unit 140 will now be described in more detail.

Beginning with the cover unit 120 in a closed position, the hooking protrusion 147c of the rotation module 147 may be positioned at first ends of the first slit hole 143a and the second slit hole 145a.

If the first cover 121 and the second cover 123 move in an open direction, the hinge unit 140 slides in a linear motion along directions in which the first cover 121 and the second cover 123 move. More specifically, while the first plate 141 slides in a linear motion along with the first cover 121 in a direction in which the cover unit 120 is opened, the second plate 143 and the third plate 145 slide in a linear motion along with the second cover 123 in a direction in which the cover unit 120 is opened. The rotation module 147 rotates about the center thereof, which is connected to the second plate 143, and one side of the first rotary unit 147a also rotates. In addition, the hooking protrusion 147c moves from first ends of the first slit hole 143a and the second slit hole 145a to second ends of the first slit hole 143a and the second slit hole 145a. Thereafter, when the hooking protrusion 147c reaches the second ends of the first slit hole 143a and the second slit hole 145a and is hooked, the rotation module 147 stops rotating and the cover unit 120 and the hinge unit 140 stop sliding. With the cover unit 120 in this opened position, the opposing sides of the flexible display unit 130 are drawn out from the cover unit 120. An exposed area of the flexible display unit 130 is greater than an exposed area of the flexible display unit with the cover unit 120 in the closed position.

If the first cover 121 and the second cover 123 move in a closed direction, the hinge unit 140 slides in a linear motion along directions in which the first cover 121 and the second cover 123 move. More specifically, while the first plate 141 slides in a linear motion along with the first cover 121 in a direction in which the cover unit 120 is closed, the second plate 143 and the third plate 145 slide in a linear motion along with the second cover 123 in a direction in which the cover unit 120 is closed. The rotation module 147 rotates about the center thereof, which is connected to the second plate 143, and one side of the first rotary unit 147a also rotates. In addition, the hooking protrusion 147c moves from second ends of the first slit hole 143a and the second slit hole 145a to first ends of the first slit hole 143a and the second slit hole 145a. Thereafter, when the hooking protrusion 147c reaches the first ends of the first slit hole 143a and the second slit hole 145a and is hooked, the rotation module 147 stops rotating and the cover unit 120 and the hinge unit 140 stop sliding. With the cover unit 120 in a closed position, the opposing sides of the flexible display unit 130 may be drawn inside the cover unit 120.

Through the opening and closing operations, the first cover 121 and the second cover 123 are opened or closed and the opposing sides of the flexible display unit 130 may be drawn in or out from the inside of the cover unit 120.

Hereinafter, a mobile device according to an exemplary embodiment of the present invention will be described.

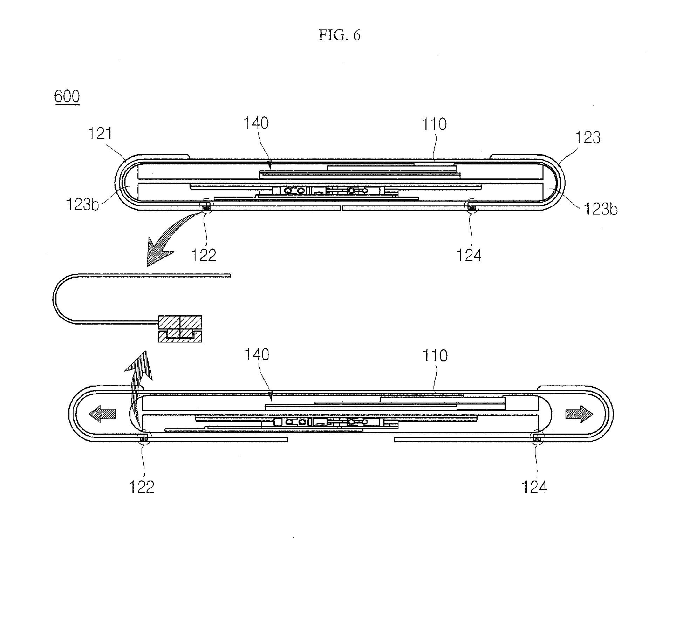

FIG. 6 is a cross-sectional view of a mobile device according to an exemplary embodiment of the present invention.

Referring to FIG. 6, the configuration and operating principles of the mobile device 600 are substantially the same as those of the mobile device 100. However, in mobile device 600, the cover unit 120 and the flexible display unit 140 are connected together by a board to board (BtoB) connector.

As shown in FIG. 6, a first side of opposing sides of the flexible display unit 130 may be connected to the first cover 121 by a board to board (BtoB) connector 122. In addition, a second side of the flexible display unit 130 may also be connected to the second cover 123 by a board to board (BtoB) connector 124. In addition to or in substitution for the board to board (BtoB) connectors 122 and 124, the connection mechanism may include zero insertion force (ZIF) connector soldering or flexible printed circuit board (F-PCB) soldering.

Since the configuration and operating principles of the mobile device 600 are substantially the same as those of the mobile device 100, the detailed description of the mobile device 600 will not be repeated.

In the mobile device 100 or the mobile device 600, a processor (not shown) may include a processing ability to adjust a displayed image according to an exposed dimension of the flexible display unit. For example, if the flexible display unit is at a maximum length while the cover unit 120 is in an open position, the processor may cause the flexible display unit to display a stretched version of the original image. Alternatively, the processor may cause the flexible display unit to display more than one image. Alternatively, the processor may cause the flexible display unit to display additional portions of an image, such as edges of a wide-screen video that cannot be viewed in full resolution with the mobile device in the closed state, or supplemental information, such as subtitles, menu information, display details or characteristics, or other information related to images displayed on the flexible display unit.

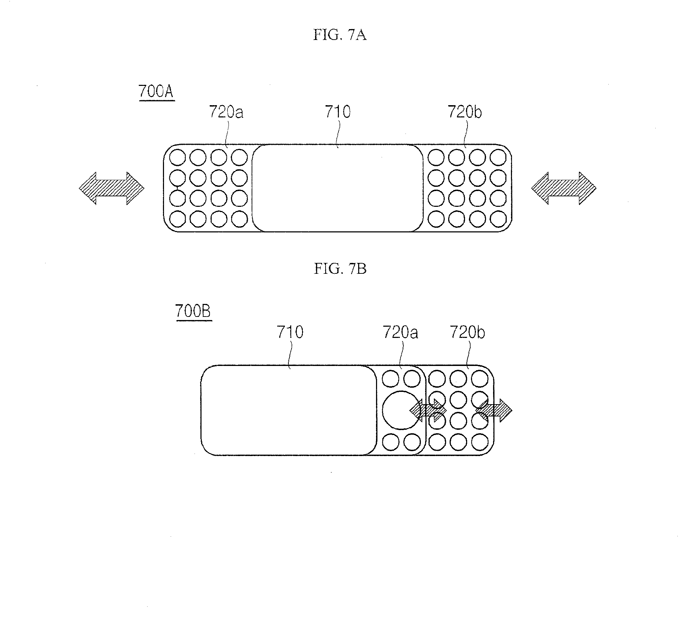

FIG. 7A and FIG. 7B illustrate mobile devices according to exemplary embodiments of the present invention.

Based on the configuration and operating principles of the mobile device 100, the mobile device 700A shown in FIG. 7A has a bidirectional slide keypad that may be implemented in which first side 720a and second side 720b may be exposed upon opening a first cover 121 and second cover 123 of the cover unit 120. In this case, a mobile device may have expandable usability of keys. Alternatively, as shown in FIG. 7B, a mobile device 700B having unidirectional dual slide keypads may be implemented. Since the keypads are opened or closed in two stages, the size of the mobile device 700B can be reduced.

It will be apparent to those skilled in the art that various modifications and variation can be made in the present invention without departing from the spirit or scope of the invention. Thus, it is intended that the present invention cover the modifications and variations of this invention provided they come within the scope of the appended claims and their equivalents.
A mobile device includes a body, a cover unit covering a lower face and an outer circumferential edge of the body and being openable, a flexible display unit having a center portion and opposing sides installed to be drawn into or out from an inside region of the cover unit as the cover unit is opened or closed; and a hinge unit configured to open if the cover unit slides in a direction away from the center of the body.

## Claims

1. A mobile device, comprising:
a body;
a cover unit covering a lower face and an outer circumferential edge of the body, the cover unit being openable in a direction away from a center of the body;
a flexible display unit comprising a center portion and opposing sides configured to be drawn into or out from an inside region of the cover unit as the cover unit is opened or closed; and
a hinge unit configured to open if the cover unit slides in a direction away from the center of the body.

2. The mobile device of claim 1, wherein
the cover unit comprises a first cover and a second cover, and
the hinge unit comprises:
a first plate connected to the first cover and comprising rails arranged at opposite ends of the first plate,
a second plate arranged on the first plate, the second plate comprising a curved first slit hole and configured to be slidable along the rails of the first plate,
a third plate connected to the second cover, arranged on the second plate, comprising a linear second slit hole and configured to be slidable along the rails of the first plate, and
a rotation module having a first side rotatably connected to the first plate, a center rotatably connected to the second plate, and a second side having a hooking protrusion arranged in the first slit hole and the second slit hole.

3. The mobile device of claim 2, wherein the rotation module comprises:
a first rotary unit comprising a first side rotatably connected to the first plate;
a second rotary unit comprising a first side with the hooking protrusion arranged thereat, and a center rotatably connected to the second plate;
and
a compression spring connected to a second side of the first rotary unit and a second side of the second rotary unit.

4. The mobile device of claim 2 or 3, wherein the rotation module allows the second plate and the third plate to slide, and the hooking protrusion moves along the first slit hole and the second slit hole as the second plate and the third plate slide.

5. The mobile device of one of claims 1 to 4, wherein the cover unit comprises:
first cover and a second cover, and
an elastic member connected between the inside region of the cover unit and a first end of the flexible display unit.

6. The mobile device of claim 5, wherein the first cover further comprises a guide member having a curved surface arranged along a path through which the flexible display unit is drawn into or out from if the first cover moves in a closed direction or an open direction, respectively.

7. The mobile device of claim 5 or 6, wherein the elastic member comprises a spring.

8. The mobile device of one of claims 1 to 7, wherein the cover unit comprises a first cover, and a first end of the flexible display unit is connected to the inside region of the cover unit using board to board (BtoB) connector soldering, zero insertion force (ZIF) connector soldering, or flexible printed circuit board (F-PCB) soldering.

9. The mobile device of claim 8, wherein the first cover further comprises a guide member having a curved surface arranged along a path through which the flexible display unit is drawn into or out from if the first cover moves in a closed direction or an open direction, respectively.

10. The mobile device of one of the preceding claims, comprising:
a first input unit and a second input unit, the first input unit and the second input unit each comprising a portion configured to be drawn into or out from the inside region of the cover unit as the cover unit is opened or closed.

11. The mobile device of one of the preceding claims, wherein the hinge unit is configured to rotate into an open position if the cover unit slides in a direction away from the center of the body.

12. A mobile device, comprising:
a body;
a cover unit covering a lower face and an outer circumferential edge of the body, the cover unit being openable away from a center of the body;
a first input unit and a second input unit, the first input unit and the second input unit each comprising a portion configured to be drawn into or out from an inside region of the cover unit as the cover unit is opened or closed; and
a hinge unit configured to rotate into an open position if the cover unit slides in a direction away from the center of the body.

13. The mobile device according to claim 12, additionally fulfilling the teaching of one of claims 1 to 9.
